(19) Europäisches Patentamt
European Patent Office
Office européen des brevets

(11) **EP 2 339 508 A1**

(12) **EUROPEAN PATENT APPLICATION**

(43) Date of publication:
**29.06.2011 Bulletin 2011/26**

(51) Int Cl.:
***G06K 9/32*** *(2006.01)*

(21) Application number: **10188664.6**

(22) Date of filing: **25.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.05.2010 KR 20100046606**
**20.11.2009 IN CH28682009**

(71) Applicant: **SAMSUNG ELECTRONICS CO., LTD.**
**Suwon-si**
**Gyeonggi-do 442-742 (KR)**

(72) Inventors:
• **Dhall, Abhinav**
**Punjab (IN)**
• **Sharma, Gaurav**
**110023 New Delhi (IN)**
• **Chaudury, Shantanu**
**110016 New Delhi (IN)**
• **Bhatt, Rajen B.**
**360007 Rajkot (IN)**

(74) Representative: **Clark, David James**
**Appleyard Lees**
**15 Clare Road**
**Halifax, Yorkshire HX1 2HY (GB)**

(54) **Method, apparatus and system for orienting a disoriented image**

(57)     A method, apparatus and system for orienting a disoriented image, and a method, apparatus and system for training a plurality of Gaussian mixture models (GMMs) to orient the disoriented image are provided. The method of training the plurality of GMMs includes: obtaining a plurality of color and texture features from the disoriented image; selecting a plurality of discriminative features from the color and texture features; calculating probabilities of each of the GMMs orienting the disoriented image, where each of the GMMs represents one of a plurality of rotation classes, and each of the rotation classes represents a rotation angle that is a multiple of a right angle. Furthermore, the system includes an electronic device that includes an embedded platform including a processor which processes the disoriented image.

FIG. 1

**Description**

BACKGROUND

1. Field

Apparatuses and methods consistent with the exemplary embodiments relate to image processing, and more particularly to a method, apparatus and system for orienting a disoriented image.

2. Description of the Related Art

Image processing can be applied for detecting an orientation angle of an image. Fo r example, the orientation can be detected by analysis of content of the image. The image is oriented to another angle for a desired orientation on a display or better organization in a storage device.

However, existing techniques for detecting orientation are not efficient if the image is of low contrast or homogeneous texture. Also, techniques exist to orient the image to an angle equal to a nearest multiple of 90 degrees from the orientation angle. However, existing techniques do not orient the image to rotation angles equal to multiples of a right angle, for example, 0, 90, 180, and 270 degrees.

Accordingly, there is a need for a method, apparatus and system for orienting a disoriented image to reduce computational complexity and increase accuracy of orientation.

SUMMARY

Exemplary embodiments provide a method, apparatus and system for orienting a disoriented image.

According to an aspect of an exemplary embodiment, there is provided a method for training a plurality of Gaussian mixture models (GMMs) for orienting a disoriented image, the method including: obtaining a plurality of color and texture features from one or more sample images; identifying a plurality of discriminative features from the color and texture features, wherein the discriminative features include one or more feature vector; constructing the GMMs for a plurality of rotation classes based on the one or more feature vectors, wherein each of the rotation classes represents a rotation angle that is a multiple of a right angle; and extracting a plurality of parameters of the GMMs for each of the rotation classes and porting the parameters to an embedded platform in an electronic device.

According to an aspect of another exemplary embodiment, there is provided a method for orienting a disoriented image, the method including: obtaining a plurality of color and texture features from the disoriented image; selecting a plurality of discriminative features from the color and texture features; calculating a probability of each of a plurality of GMMs orienting the disoriented image, wherein each of the plurality of GMMs represents one of a plurality of rotation classes and each of the rotation classes represents a rotation angle, wherein the rotation angle is a multiple of a right angle.

According to an aspect of another exemplary embodiment, there is provided a system for orienting a disoriented image, the system including an electronic device that includes an embedded platform, wherein the embedded platform includes a processor for processing the disoriented image, and the processor includes: an extraction unit which extracts a plurality of color and texture features from the disoriented image; a selection unit which selects a plurality of discriminative features from the color and texture features; a probability module which calculates probability of each of a plurality of GMMs orienting the disoriented image based on the discriminative features; a determination unit which determines one of the plurality of GMMs with a highest probability; and an orientation unit which orients the disoriented image using the determined GMM.

According to an aspect of another exemplary embodiment, there is provided an image processing apparatus including: a processor which extracts a plurality of color and texture features from a predetermined image, determines whether the image is oriented on the basis of a plurality of discriminative features selected from the plurality of color and texture features, and processes the image to be oriented using Gaussian mixture models based on the plurality of discriminative features if it is determined that the image is disoriented; and a display unit which displays the image processed by the processor.

The processor may include: an extraction unit which extracts a plurality of color and texture features from the image; a selection unit which selects a plurality of discriminative features from the plurality of color and texture features; a probability module which calculates a probability of each of a plurality of GMMs orienting the image based on the plurality of discriminative features; a determination unit which determines one of the GMMs with a highest calculated probability; and an orientation unit which orients the image using the determined GMM.

The image processing apparatus may further include: a communication interface which receives the image from an external source; and a memory which stores information extracted from the disoriented image.

The processor may further include: a Gaussian model construction unit which constructs the plurality of GMMs for the plurality of rotation classes based on the discriminative feature vectors; and a parameter extraction unit which extracts a plurality of parameters of the GMMs for each of the rotation classes.

The rotation classes may respectively represent a rotation angle that is a multiple of a right angle.

The image processing apparatus may further include a storage module which stores a plurality of parameters extracted by the parameter extraction unit.

According to an aspect of another exemplary embodiment, there is provided an image processing apparatus including: a processor which extracts a plurality of color and texture features from at least one sample image, identifies a plurality of discriminative features from the plurality of color and texture features, constructs a plurality of GMMs for a plurality of rotation classes based on the plurality of discriminative features, and extracts a plurality of parameters of the plurality of the GMMs for each of the rotation classes, wherein each of the plurality of rotation classes represents a rotation angle that is a multiple of a right angle.

BRIEF DESCRIPTION OF THE DRAWINGS

In the accompanying figures, similar reference numerals may refer to identical or functionally similar elements. These reference numerals are used in the detailed description to illustrate various exemplary embodiments and to explain various aspects of the exemplary embodiments, in which:

FIG. 1 is a block diagram of a system for orienting a disoriented image, according to an exemplary embodiment;

FIG. 2 is a flow chart illustrating a method for training a plurality of Gaussian mixture models (GMMs) for orienting of a disoriented image, according to an exemplary embodiment;

FIG. 3 is a flow chart illustrating a method for orienting a disoriented image, according to an exemplary embodiment; and

FIG. 4 is an exemplary illustration of orienting a disoriented image, according to an exemplary embodiment.

Persons skilled in the art will appreciate that elements in the figures are illustrated for simplicity and clarity and may have not been drawn to scale. For example, the dimensions of some of the elements in the figures may be exaggerated relative to other elements to help to improve an understanding of various exemplary embodiments.

DETAILED DESCRIPTION OF EXEMPLARY EMBODIMENTS

It should be observed that method steps and system components have been represented by symbols in the figures, showing only specific details that are relevant for an understanding of the exemplary embodiments. Further, details that may be readily apparent to persons ordinarily skilled in the art may not have been disclosed. In the present disclosure, relational terms such as first and second, and the like, may be used to distinguish one entity from another entity, without necessarily implying any actual relationship or order between such entities.

Exemplary embodiments described herein provide a method, apparatus and system for orienting a disoriented image.

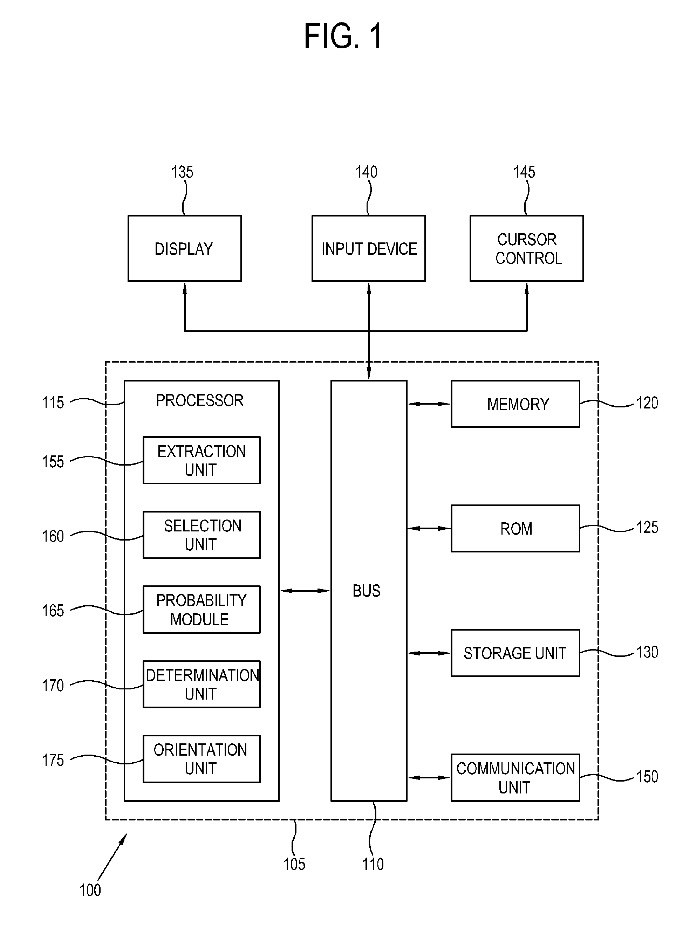

FIG. 1 is a block diagram of a system 100 for orienting a disoriented image. Referring to FIG. 1, the system 100 includes an electronic device 105. Examples of the electronic device 105 include, but are not limited to, a computer, a laptop, a digital camera, a mobile device, a digital album, a digital television, a hand held device, a personal digital assistant (PDA), a camcorder, a video player, a workstation, etc.

The electronic device 105 includes a bus 110 for communicating information, and a processor 115 coupled with the bus 110 for processing information. The electronic device 105 also includes a memory 120, such as a random access memory (RAM), coupled to the bus 110 for storing information used by the processor 115. The memory 120 may be used for storing temporary information used by the processor 115. The electronic device 105 further includes a read only memory (ROM) 125 coupled to the bus 110 for storing static information used by the processor 115. A storage unit 130, such as a magnetic disk, a hard disk drive, an optical disk, etc., can be provided and coupled to the bus 110 for storing information.

The electronic device 105 can be coupled via the bus 110 to a display 135, such as a cathode ray tube (CRT), a liquid crystal display (LCD), a plasma display panel, an organic light emitting diode display, etc., for displaying information. An input device 140, including various keys, is coupled to the bus 110 for communicating information to the processor 115. In some exemplary embodiments, cursor control 145, such as a mouse, a trackball, a joystick, cursor direction keys, etc., for communicating information to the processor 115 and for controlling cursor movement on the display 135 can also be present in the system 100.

Furthermore, in an exemplary embodiment, the display 135 may perform the functions of the input device 140. For example, the display 135 may be a touch screen display operable to receive haptic inputs. A user can then use a stylus, a finger, etc., to select one or more portions on the visual image displayed on the touch screen device.

Moreover, in an exemplary embodiment, the electronic device 105 performs operations using the processor 115. The information can be read into the memory 120 from a machine-readable medium, such as the storage unit 130.

In another exemplary embodiment, hard-wired circuitry can be used in place of or in combination with software instructions to implement various exemplary embodiments.

The term machine-readable medium can be defined as a medium providing data to a machine to enable the machine to perform a specific operation. The machine-readable medium can be a storage medium from among storage media. The storage media can include non-volatile media and volatile media. For example, the storage unit 130 can be a non-volatile medium, and the memory 120 can be a volatile medium. All such media are tangible to enable the instructions carried by the media to be detected by a physical mechanism that reads the instructions into the machine.

Examples of the machine readable medium include, but are not limited to, a floppy disk, a flexible disk, a hard disk, a magnetic tape, a CD-ROM, an optical disk, punchcards, papertape, a RAM, a PROM, EPROM, a FLASH-EPROM, etc.

The machine readable medium can also include online links, download links, and installation links providing the information to the processor 115.

The electronic device 105 also includes a communication interface 150 coupled to the bus 110 for enabling data communication. Examples of the communication interface 150 include, but are not limited to, an integrated services digital network (ISDN) card, a modem, a local area network (LAN) card, an infrared port, a Bluetooth port, a zigbee port, a wireless port, etc.

In an exemplary embodiment, the processor 115 includes one or more processing units for performing one or more functions of the processor 115. The processing units are hardware circuitry performing specified functions. The processor 115 processes a disoriented image that is to be oriented. Moreover, the processor 115 includes an extraction unit 155 for extracting a plurality of color and texture features from the disoriented image. The color and texture features may also be referred to as low-level features. The processor 115 also includes a selection unit 160 for selecting multiple discriminative features from the color and texture features. Further, the processor 115 includes a probability module 165 fo r calculating probability of each of the Gaussian mixture models (GMMs) orienting the disoriented image based on the discriminative features.

Furthermore, the processor 115 includes a determination unit 170 for determining one GMM from among the GMMs with a highest value of the probability. Further, the processor also includes an orientation unit 175 for orienting the disoriented image using the determined GMM.

The storage unit 130 stores a codebook corresponding to color values. In some embodiments, the processor includes one or more modules to train the GMMs. The modules include a Gaussian model construction unit for constructing the GMMs for each of the rotation classes based on one or more feature vectors and a parameter extraction module for extracting multiple parameters of the GMMs for each of rotation classes. In an exemplary embodiment, the embedded platform includes a storage module for storing one or more parameters of the GMMs for each of the rotation classes. Each of the rotation classes represents a rotation angle. The rotation angle is a multiple of a right angle, for example, 0, 90, 180, and 270 degrees.

According to another exemplary embodiment, an image processing apparatus includes a processor to extract a plurality of color and texture features from a predetermined image, to determine whether the image is oriented or not on the basis of multiple discriminative features selected from the color and texture features, and to process the image to be oriented using Gaussian mixture models (GMMs) based on the multiple discriminative features if it is determined that the image is disoriented. The image processing apparatus further includes a display unit to display an image processed by the processor.

The image processing apparatus may include any display apparatus including the display unit to display an image. For example, the image processing apparatus may include a digital television (DTV), an Internet protocol television (IPTV), a personal computer (PC), a mobile PC (such as a netbook computer, a laptop computer, etc.), a digital camera, a personal digital assistant (PDA), a portable multimedia player (PMP), a smart phone, a camcorder, a video player, a digital album, a game console, etc.

The image may include an image previously stored in the image processing apparatus or an image received from an outside through a communication interface to be described later.

The processor extracts a plurality of color and texture features from a predetermined image, determines whether the image is oriented or not on the basis of multiple discriminative features selected from the color and texture features, and processes the image to be displayed on the display unit if it is determined that the image is oriented. On the other hand, if it is determined that the image is disoriented, the processor processes the image to be oriented using the GMMs based on the multiple discriminative features.

Here, the orientation of the image may refer to a portrait direction in the case of a portrait image, and a landscape direction in the case of a landscape image.

The processor includes: an extraction unit for extracting a plurality of color and texture features from the image; a selection unit for selecting multiple discriminative features from the color and texture features; a probability module for calculating a probability of each of the GMMs orienting the image based on the discriminative features; a determination unit for determining one GMM from among the GMMs with a highest value of the probability; an orientation unit for orienting the disoriented image using the determined GMM; a Gaussian model construction unit for constructing the GMMs for each of the rotation classes based o n the discriminative features; and a parameter extraction unit for extracting multiple parameters of the GMMs for each of the rotation classes. Here, the extraction unit, the selection unit, the probability module, the determination unit, the orientation unit, the Gaussian model construction unit, and the parameter extraction unit are similar to those of the electronic device 105 in the exemplary embodiment described with reference to FIG. 1, and thus repetitive descriptions thereof are omitted herein.

The image processing apparatus further includes the communication interface to communicate with an external source. The communication interface includes, but is not limited to, an integrated services digital network (ISDN) card, a modem, a local area network (LAN) card, an infrared port, a Bluetooth port, a zigbee port, a wireless port, etc. Also, the communication interface further includes a module to communicate with a universal serial bus (USB) memory, an external hard disk drive, etc., as an external storage device.

Also, the image processing apparatus further includes a memory for storing information extracted from the image, and a storage module for storing a plurality of parameters extracted from the parameter extraction unit. Here, the memory and the storage module are similar to those of the electronic device 105 in the exemplary embodiment described with reference to FIG. 1, and thus repetitive descriptions thereof are omitted herein.

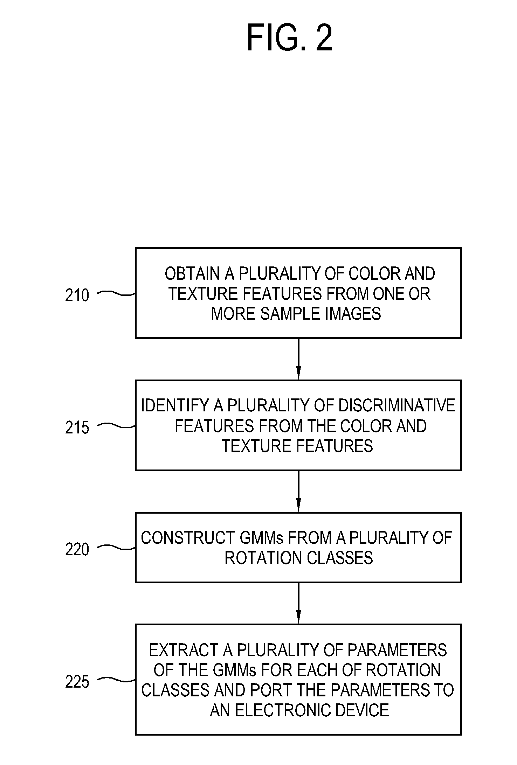

FIG. 2 is a flow chart illustrating a method for training a plurality of Gaussian mixture models (GMMs) for orienting of a disoriented image, according to an exemplary embodiment.

Referring to FIG. 2, at operation 210, a plurality of color and texture features are obtained from one or more sample images. The color and texture features include low level features. In an exemplary embodiment, the color and texture features are obtained using information theoretic feature selection. Each of the sample images belongs to one of rotation classes based on a rotation angle of each of the sample images. In an exemplary embodiment, the texture features are obtained using one or more edge detection algorithms.

At operation 215, a plurality of discriminative features is identified from the color and texture features. The discriminative features include one or more feature vectors. In an exemplary embodiment, the discriminative features are identified using information theoretic feature selection.

At operation 220, the GMMs are constructed for a plurality of rotation classes based on the one or more feature vectors. Each of the rotation classes represents a rotation angle. The rotation angle is a multiple of a right angle, for example, 0, 90, 180, and 270 degrees. A first probability is determined based on a feature vector from among the feature vectors. A probability of selecting a GMM from among the GMMs is determined based on the first probability for orienting each of the sample images. For a given feature vector xt, a probability of selecting an ith Gaussian model may be determined according to equation (1):

$$P_T(i|x_t) = \frac{\omega_i P_i(x_t)}{\sum_{j=1}^{M} \omega_j P_j(x_t)} \quad \text{.......................... . .............. (1)}$$

where $\mu_i$ is a mean of the ith Gaussian mixture, $\Sigma_i$ is a covariance of the ith Gaussian mixture, and $\omega_i$ are priori weights of the ith Gaussian mixture. Also, the first probability may be determined by equation (2):

$$P_i(x_t) = \frac{1}{(2\pi)^{D/2}|\Sigma_i|^{1/2}} e^{[(x_t - \mu_i)\Sigma_i^{-1}(x_t - \mu_i)]} \quad \text{.............. . (2)}$$

At operation 225, a plurality of parameters of the GMMs is extracted for each of the rotation classes and the parameters on an embedded platform are ported to an electronic device 105. Examples of the electronic device 105 include, but are not limited to, a computer, a laptop, a digital camera, a camcorder, a mobile device, a digital album, a digital television, a hand held device, a personal digital assistant (PDA), a video player, a workstation, etc.

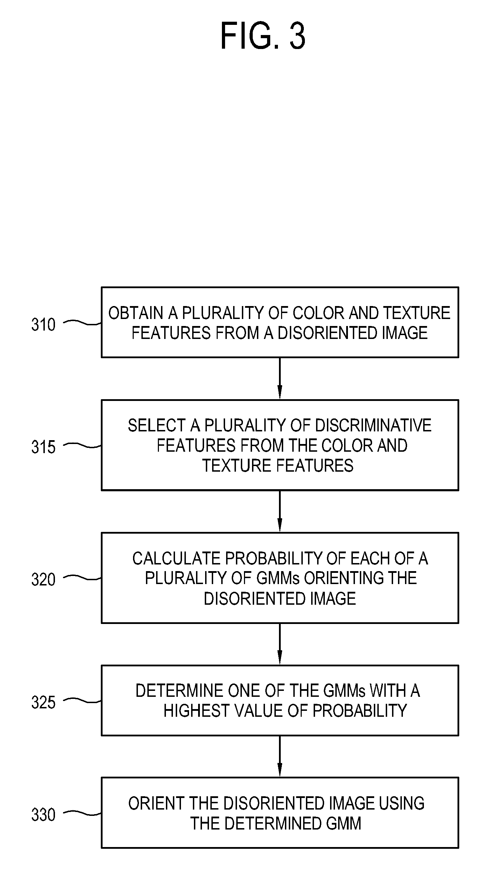

FIG. 3 is a flow chart illustrating a method for orienting a disoriented image, according to an exemplary embodiment.

Referring to FIG. 3, at operation 310, a plurality of color and texture features are obtained from the disoriented image. The color and texture features include low level features. In an exemplary embodiment, the color and texture features are obtained using information theoretic feature selection. Each of the sample images belongs to one of rotation classes based on a rotation angle of each of the sample images. In an exemplary embodiment, the texture features are obtained using one or more edge detection algorithms.

At operation 315, a plurality of discriminative features is selected from the color and texture features. The discriminative features include one or more feature vectors. In an exemplary embodiment, the discriminative features are identified using information theoretic feature selection.

At operation 320, a probability of each of a plurality of GMMs orienting the disoriented image based on the discriminative features is calculated. Each of the GMMs represents one of a plurality rotation classes. Each of the rotation classes represents a rotation angle. The rotation angle is a multiple of a right angle, for example, 0, 90, 180, and 270 degrees. The rotation class of the disoriented image may be determined using a log likelihood ratio. For example, the log likelihood ratio of classification of an audio sample into a speech or a non speech class may be calculated according to equation (3):

$$LLR = \log \frac{P(X/\lambda_{sp})}{P(X/\lambda_{np})}$$

$$(3)$$

where $P(X/\lambda sp)$ is the likelihood given that a feature vector X of the audio sample is from a speech class and $P(X/\lambda np)$ is the likelihood given that the feature vector X belongs to a non speech class.

The probability of each of the GMMs orienting the disoriented image is determined using one or more parameters of the GMMs. A maximum probability of the parameters may be obtained using an iterative expectation maximization algorithm. To obtain the maximum probability of the parameters, an initial model $\lambda$ may be used to estimate a new model $\lambda 1$, such that a probability of selecting $\lambda$ given by $P(X/\lambda)$ is greater than a probability of selecting $\lambda 1$ given by $P(X/\lambda 1)$. The new mode $\lambda 1$ then becomes the initial model for a next iteration. The iterations are continued until a convergence threshold is reached.

At operation 325, one of the GMMs with a highest value of the probability is determined. The highest value of the probability indicates the most probable GMM from among the plurality of GMMs for orienting the disoriented image.

At operation 330, the disoriented image is oriented using the determined GMM. To orient the disoriented images, a plurality of responses of the determined GMM is computed for the feature vectors of the disoriented image. One or more response values from weighted combinations of the computed responses is obtained. A rotation angle giving a maximum one of the responses is selected and the disoriented image is rotated by the selected rotation angle to obtain the oriented image.

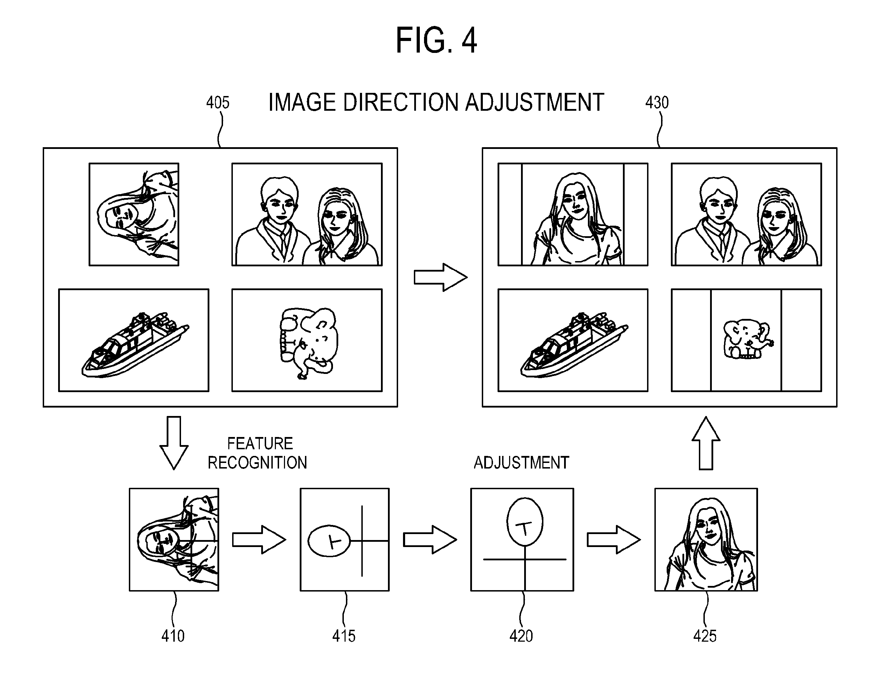

FIG. 4 is an exemplary illustration of orienting a disoriented image 405, according t o an exemplary embodiment. Referring to FIG. 4, a sub image 410 from the disoriented image 405 is subjected to feature recognition using information theoretic feature selection. The color and texture features of the sub image 410 are extracted to obtain a second sub image 415. The color and texture features may be extracted using edge detection algorithm. Furthermore, multiple discriminative features may be identified using the color and texture features. The discriminative features are oriented using one or more Gaussian mixture models to obtain an oriented sub image 420. The oriented sub image 420 is used to obtain an oriented sub image 425. The oriented sub image 425 is used to obtain the oriented image 430.

In the preceding specification, the present inventive concept has been described with reference to specific exemplary embodiments. However, it will be apparent to a person of ordinary skill in the art that various modifications and changes can be made, without departing from the scope of the present inventive concept, as set forth in the claims below. Accordingly, the specification and figures are to be regarded as illustrative examples of exemplary embodiments, rather than in a restrictive sense. All such possible modifications are intended to be included within the scope of the present inventive concept.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method for training a plurality of Gaussian mixture models (GMMs) for orienting of a predetermined image, the method comprising:

   obtaining a plurality of color and texture features from at least one sample image;
   identifying a plurality of discriminative features from the plurality of color and texture features, wherein the discriminative features comprise at least one feature vector;
   constructing the GMMs for a plurality of rotation classes based on the at least one feature vector, wherein each of the rotation classes represents a rotation angle, and wherein the rotation angle is a multiple of a right angle; and
   extracting a plurality of parameters of the GMMs for each of the rotation classes and porting the parameters to an embedded platform in an electronic device.

2. The method of claim 1, wherein each of the sample images belongs to one of the rotation classes based on a rotation angle of each of the at least one sample image.

3. The method of claim 1, wherein the constructing the GMMs comprises:

   determining a first probability based on one feature vector from among the at least one feature vector; and
   determining a probability of selecting one GMM from among the GMMs based on the first probability.

4. The method of claim 1, wherein the obtaining the plurality of color and texture features comprises obtaining the plurality of color and texture features on the basis of information theoretic feature selection.

5. An image processing method of an image processing apparatus, the method comprising:

   obtaining a plurality of color and texture features from a predetermined image;
   selecting a plurality of discriminative features from the color and texture features;
   determining whether the image is oriented on the basis of the discriminative features; and
   processing the image to be oriented using the Gaussian mixture models (GMMs) based on the plurality of discriminative features if it is determined that the image is disoriented.

6. The method of claim 5, wherein the processing the image comprises:

   calculating a probability of each of a plurality of GMMs respectively representing a plurality of rotation classes each of which represents a rotation angle that is a multiple of a right angle, o n the basis of the discriminative features;
   determining one of the GMMs with a highest value of the calculated probability; and
   processing the image to be oriented using the determined GMM.

7. The method of claim 5, wherein the obtaining the plurality of color and texture features comprises obtaining the plurality of color and texture features on the basis of information theoretic feature selection.

8. The method of claim 5, further comprising:

   receiving the image from an exterior through a communication interface; and
   storing the information of the image, which is obtained in the obtaining, in a memory.

9. The method of claim 6, wherein the calculating the probability comprises:

   constructing the GMMs for each of the rotation classes based on the discriminative features; and
   extracting a plurality of parameters of the GMMs for each of the rotation classes.

**10.** The method of claim 9, further comprising storing the plurality of parameters extracted in the extracting.

**11.** An image processing apparatus comprising:

a processor which extracts a plurality of color and texture features from a predetermined image, determines whether the image is oriented on the basis of a plurality of discriminative features selected from the plurality of color and texture features, and processes the image to be oriented using Gaussian mixture models (GMMs) based on the plurality of discriminative features if it is determined that the image is disoriented; and
a display unit which displays the image processed by the processor.

**12.** The image processing apparatus of claim 11, wherein the processor comprises:

an extraction unit for extracting a plurality of color and texture features from the image;
a selection unit for selecting a plurality of discriminative features from the plurality of color and texture features;
a probability module for calculating probabilities of each of a plurality of GMMs orienting the image based on the discriminative features;
a determination unit for determining one of the GMMs with a highest value of the probability; and
an orientation unit for orienting the image using the determined GMM.

**13.** The image processing apparatus of claim 11, further comprising:

a communication interface for receiving the image from an exterior; and
a memory for storing information extracted from the disoriented image.

**14.** The image processing apparatus of claim 11, wherein the processor further comprises:

a Gaussian model construction unit for constructing the GMMs for each of the rotation classes based on the discriminative feature vectors; and
a parameter extraction unit for extracting a plurality of parameters of the GMMs for each of the rotation classes.

**15.** The image processing apparatus of claim 14, wherein the rotation classes respectively represent a rotation angle that is a multiple of a right angle.

# FIG. 1

# FIG. 2

210 — OBTAIN A PLURALITY OF COLOR AND TEXTURE FEATURES FROM ONE OR MORE SAMPLE IMAGES

215 — IDENTIFY A PLURALITY OF DISCRIMINATIVE FEATURES FROM THE COLOR AND TEXTURE FEATURES

220 — CONSTRUCT GMMs FROM A PLURALITY OF ROTATION CLASSES

225 — EXTRACT A PLURALITY OF PARAMETERS OF THE GMMs FOR EACH OF ROTATION CLASSES AND PORT THE PARAMETERS TO AN ELECTRONIC DEVICE

# FIG. 3

310 — OBTAIN A PLURALITY OF COLOR AND TEXTURE FEATURES FROM A DISORIENTED IMAGE

315 — SELECT A PLURALITY OF DISCRIMINATIVE FEATURES FROM THE COLOR AND TEXTURE FEATURES

320 — CALCULATE PROBABILITY OF EACH OF A PLURALITY OF GMMs ORIENTING THE DISORIENTED IMAGE

325 — DETERMINE ONE OF THE GMMs WITH A HIGHEST VALUE OF PROBABILITY

330 — ORIENT THE DISORIENTED IMAGE USING THE DETERMINED GMM

# FIG. 4

## IMAGE DIRECTION ADJUSTMENT

405

430

FEATURE RECOGNITION

ADJUSTMENT

410

415

420

425

Europäisches Patentamt

European Patent Office

Office européen des brevets

**EUROPEAN SEARCH REPORT**

Application Number

EP 10 18 8664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADITYA VAILAYA ET AL: "Automatic Image Orientation Detection", IEEE TRANSACTIONS ON IMAGE PROCESSING, IEEE SERVICE CENTER, PISCATAWAY, NJ, US, vol. 11, no. 7, 1 July 2002 (2002-07-01), XP011074284, ISSN: 1057-7149 | 1-3,5,6, 8-15 | INV. G06K9/32 |
| Y | * the whole document * | 4,7 | |
| Y | VASCONCELOS N ET AL: "Scalable Discriminant Feature Selection for Image Retrieval and Recognition", 1 January 2004 (2004-01-01), PROCEEDINGS OF THE 2004 IEEE COMPUTER SOCIETY CONFERENCE ON COMPUTER VISION AND PATTERN RECOGNITION 27 JUNE-2 JULY 2004 WASHINGTON, DC, USA, PROCEEDINGS OF THE 2004 IEEE COMPUTER SOCIETY CONFERENCE ON COMPUTER VISION AND PATTERN RECOGNITION IEEE COMP, XP009144390, ISBN: 978-0-7695-2158-9 * abstract * * section 2. Information theoretic feature selection * | 4,7 | |
| A,P | GAURAV SHARMA ET AL: "Hierarchical System for Content Based Categorization and Orientation of Consumer Images", 16 December 2009 (2009-12-16), PATTERN RECOGNITION AND MACHINE INTELLIGENCE, SPRINGER BERLIN HEIDELBERG, BERLIN, HEIDELBERG, PAGE(S) 495 - 500, XP019136323, ISBN: 978-3-642-11163-1 * the whole document * | 4,7 | |

TECHNICAL FIELDS SEARCHED (IPC)

G06K
G06T

-/--

The present search report has been drawn up for all claims

| Place of search | Date of completion of the search | Examiner |
|---|---|---|
| Munich | 10 February 2011 | Rimassa, Simone |

| | Europäisches Patentamt |
|---|---|
| | European Patent Office |
| | Office européen des brevets |

**EUROPEAN SEARCH REPORT**

Application Number

EP 10 18 8664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EKATERINA TOLSTAYA: "Content-based image orientation recognition", [Online] 23 June 2007 (2007-06-23), GRAPHICON 2007, MOSCOW RUSSIA, JUNE 23-27 2007,, PAGE(S) PAPER48 - 4PP, XP009121258, Retrieved from the Internet: URL:http://www.graphicon.ru/2007/proceedings/Papers/Paper_48.pdf> * abstract * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 10 February 2011 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)